# EUROPEAN PATENT APPLICATION

(11) **EP 4 726 654 A1**
(43) Date of publication of application: **15.04.2026**
(21) Application number: 24935273.3
(22) Date of filing: 12.08.2024
(51) Int. Cl.: G06T 7/70, G05B 17/02, G05D 1/00

(54) **METHOD FOR DISPLAYING POSE OF UNMANNED AERIAL VEHICLE, COMPUTER DEVICE, STORAGE MEDIUM, PROGRAM PRODUCT AND UNMANNED AERIAL VEHICLE CARRIER**

(71) Applicant: SZ Zhuoyu Technology Co., Ltd., Shenzhen, Guangdong 518055 (CN)
(72) Inventor: MIAO, Jim, Shenzhen, Guangdong 518055 (CN)
(74) Representative: Hautier IP - MC/EP
(86) International application number: PCT/CN2024/111386
(87) International publication number: WO 2026/036248

(57) **Abstract**

The present application discloses a method for displaying a pose of a UAV, a computer device, a storage medium, a program product, and a UAV vehicle. The method includes: generating a stereoscopic image of the UAV and a chassis component, wherein the stereoscopic image of the UAV is located in a space above the chassis component; and in response to a pose change of the UAV, causing the stereoscopic image of the UAV to undergo a corresponding pose change relative to the chassis component. In the embodiments of the present application, through the cooperation of the stereoscopic image of the UAV and the chassis component, the stereoscopic display of the pose of the UAV is achieved, and by controlling the pose change of the stereoscopic image of the UAV relative to the chassis component in response to the pose change of the UAV, the user can intuitively and accurately understand the pose of the UAV during UAV operation, without requiring extra learning, thereby reducing the user's learning cost.

## Description

### TECHNICAL FIELD

The present application relates to the technical field of unmanned aerial vehicles (UAVs), and in particular, to a method, a computer device, a storage medium, a program product, and a UAV vehicle for displaying a pose of a UAV.

### BACKGROUND

With the continuous expansion of UAV application fields, the application scenarios of UAVs have also become increasingly diverse. A user can control a UAV to fly to a destination through a control terminal, and in this process, it is necessary to constantly adjust the flight control parameters of the UAV so that the UAV can safely fly to the destination. In the related technology, in order to facilitate the user's understanding of the orientation and attitude of the UAV, a two-dimensional plane diagram capable of displaying the UAV orientation in real time and UAV attitude data is provided. However, understanding the orientation and attitude of the UAV through a two-dimensional plane diagram and attitude data renders a high learning cost and is not sufficiently intuitive for the user.

### SUMMARY

The embodiments of the present application provide a method for displaying a pose of a UAV, a computer device, a storage medium, a program product, and a UAV vehicle, so as to at least solve one of the above technical problems.

In a first aspect, an embodiment of the present application provides a method for displaying a pose of a UAV, including: generating a stereoscopic image of the UAV and a chassis component, wherein the stereoscopic image of the UAV is located in a space above the chassis component; causing the stereoscopic image of the UAV to undergo a corresponding pose change relative to the chassis component in response to a pose change of the UAV.

In some embodiments, the pose change of the UAV at least includes one of a pitch change, a roll change, and a yaw change of the UAV; and causing the stereoscopic image of the UAV to undergo a corresponding pose change relative to the chassis component in response to the pose change of the UAV includes: controlling the stereoscopic image of the UAV to undergo a pitch change relative to the chassis component in response to the pitch change of the UAV; and/or controlling the stereoscopic image of the UAV to undergo a roll change relative to the chassis component in response to the roll change of the UAV; and/or controlling a yaw change of the stereoscopic image of the UAV in response to the yaw change of the UAV.

In some embodiments, the method for displaying a pose of a UAV further includes: generating a pitch indication component in a front space or rear space of the stereoscopic image of the UAV in response to the pitch change of the UAV, the pitch indication component varying with a degree of pitch.

In some embodiments, the method for displaying a pose of a UAV further includes: generating a roll indication component in a left-side space or right-side space of the stereoscopic image of the UAV in response to the roll change of the UAV, the roll indication component varying with a degree of roll.

In some embodiments, an edge of the chassis component is provided with a direction marker; and controlling a yaw change of the stereoscopic image of the UAV in response to the yaw change of the UAV includes: controlling the direction marker to undergo a positional change relative to the stereoscopic image of the UAV in response to the yaw change of the UAV.

In some embodiments, a surface of the chassis component is provided with a return point marker; the method further includes: keeping the position of the stereoscopic image of the UAV unchanged relative to the chassis component while controlling the return point to undergo a corresponding positional change on the surface of the chassis component in response to a change in the position of the UAV and/or a change in the position of the return point.

In some embodiments, the surface of the chassis component is provided with a remote controller marker; the method further includes: keeping the position of the stereoscopic image of the UAV unchanged relative to the chassis component while controlling the remote controller marker to undergo a corresponding positional change on the surface of the chassis component in response to a change in the position of the UAV and/or a change in the position of the remote controller.

In some embodiments, the surface of the chassis component is provided with a return point marker; the method further includes: keeping the position of the return point unchanged on the surface of the chassis component while controlling the stereoscopic image of the UAV to undergo a corresponding positional change relative to the return point in response to a change in the position of the UAV and/or a change in the position of the return point.

In some embodiments, the surface of the chassis component is provided with a remote controller marker; the method further includes: keeping the position of the remote controller marker unchanged on the surface of the chassis component while controlling the stereoscopic image of the UAV to undergo a corresponding positional change relative to the remote controller marker in response to a change in the position of the UAV and/or a change in the position of the remote controller.

In some embodiments, the method for displaying a pose of a UAV further includes: controlling a change in size of the stereoscopic image of the UAV in response to the change in the position of the UAV, wherein the farther the position of the UAV is from the return point, the smaller the stereoscopic image of the UAV.

In some embodiments, the method for displaying a pose of a UAV further includes: controlling the UAV in response to a user's control operation on the stereoscopic image of the UAV; and/or adjusting the UAV to a preset pose in response to a user's operation on a pose adjustment shortcut component; and/or controlling the pose of the UAV in response to pose data input by the user.

In some embodiments, the method for displaying a pose of a UAV further includes: controlling a computer device to switch from a first display mode to a second display mode in response to a user's display mode switching operation or in response to satisfaction of preset conditions. When the first display mode is a two-dimensional display mode, the second display mode is a three-dimensional display mode; when the first display mode is a three-dimensional display mode, the second display mode is a two-dimensional display mode.

In a second aspect, embodiments of the present application provides a computer device, including a memory, a processor, and a computer program stored in the memory, wherein the processor executes the computer program to implement the steps of the method for displaying a pose of a UAV of any embodiments of the present application.

In some embodiments, the computer device is configured with a display module, and the display module includes a first display area and a second display area; wherein the first display area displays the pose of the UAV, and the second display area displays images captured by the UAV. For example, the first display area and/or the second display area display the flight data of the UAV.

In some embodiments, the processor is configured to: when receiving a movement instruction or detecting that preset movement conditions are satisfied, control the UAV to fly toward a remote controller according to the relative position relationship between the UAV and the remote controller, and capture images of the location where the remote controller is located; or, when receiving a movement instruction or detecting that preset movement conditions are satisfied, control a UAV vehicle to drive toward the remote controller according to the relative position relationship between the UAV vehicle and the remote controller, and capture images of the location where the remote controller is located.

In a third aspect, an embodiment of the present application provides a computer-readable storage medium, in which a computer program and/or instruction is stored, which, when executed by a processor, implements the steps of the method for displaying a pose of a UAV of any embodiments of the present application.

In a fourth aspect, an embodiment of the present application provides a computer program product, including a computer program and/or instruction, which, when executed by a processor, implements the steps of the method for displaying a pose of a UAV of any embodiments of the present application.

In a fifth aspect, an embodiment of the present application provides a UAV vehicle, including the computer device of any embodiment of the present application, wherein the UAV vehicle is further used to carry the UAV.

In the embodiments of the present application, through the cooperation of the stereoscopic image of the UAV and the chassis component, the stereoscopic display of the pose of the UAV is achieved, and by controlling the pose change of the stereoscopic image of the UAV relative to the chassis component in response to the pose change of the UAV, the user can intuitively and accurately understand the pose of the UAV during UAV operation, without requiring extra learning, thereby reducing the user's learning cost.

### BRIEF DESCRIPTION OF THE DRAWINGS

In order to more clearly illustrate the technical solutions in the embodiments of the present invention, the drawings required in the description of the embodiments will be briefly introduced below. It is apparent that the drawings described below are merely some embodiments of the present invention, and for those of ordinary skill in the art, other drawings can also be obtained based on these drawings without any creative work.
FIG. 1 is a flowchart of an embodiment of the method for displaying a pose of a UAV according to the present application;
FIG. 2 is a schematic diagram of an embodiment for displaying a stereoscopic image of the UAV and a chassis component according to the present application;
FIG. 3 is a schematic diagram of an embodiment for displaying an upward pitch degree of the UAV according to the present application;
FIG. 4 is a schematic diagram of another embodiment for displaying the upward pitch degree of the UAV according to the present application;
FIG. 5 is a schematic diagram of an embodiment for displaying a downward pitch degree of the UAV according to the present application;
FIG. 6 is a schematic diagram of an embodiment for displaying a clockwise roll degree of the UAV according to the present application;
FIG. 7 is a schematic diagram of an embodiment for displaying a counterclockwise roll degree of the UAV according to the present application;
FIG. 8 is a schematic diagram of an embodiment in which a direction marker is provided on the chassis component according to the present application;
FIG. 9 is a schematic diagram of another embodiment in which a direction marker is provided on the chassis component according to the present application;
FIG. 10 is a schematic diagram of a display interface of an embodiment of a computer device according to the present application;
FIG. 11 is a schematic diagram of another embodiment of a display interface of a computer device according to the present application;
FIG. 12 is a schematic diagram of another embodiment of a display interface of a computer device according to the present application;
FIG. 13 is a schematic diagram of the structure of an embodiment of a computer device according to the present application.

### DETAILED DESCRIPTION

In order to make the objects, technical solutions, and advantages of the embodiments of the present application clearer, the technical solutions of the embodiments of the present application will be described in detail below with reference to the accompanying drawings. It should be noted that the embodiments described are only part of the embodiments of the present application and not all of them. All other embodiments obtained by a person of ordinary skill in the art based on the embodiments without creative efforts shall fall within the scope of the present application. It is to be noted that the embodiments and the features in the embodiments in the present application may be combined with each other in the absence of conflicts.

It should also be noted that, in the present application, the terms "include" and "comprise" not only encompass the listed elements but also include other elements not explicitly listed, as well as elements that are inherent to such processes, methods, articles, or devices. Unless otherwise specified, an element defined by the phrase "comprises..." does not exclude the presence of additional identical elements in the process, method, article, or device that comprises the stated element.

The present application provides a method for displaying a pose of a UAV, which is used for real-time displaying of the pose of the UAV during the flight process of the UAV, so that the user can intuitively observe the pose of the UAV. The execution subject of the method may be a computer device, such as a UAV remote controller, a smartphone, a tablet computer, an in-vehicle electronic device, a VR device, etc., which is not limited in the present application. By means of the method of displaying the pose of the UAV provided in the present application, the pose of the UAV can be displayed stereoscopically on the computer device. The computer device may directly communicate with the UAV, or may indirectly obtain the pose of the UAV and other information through a device that communicates with the UAV.

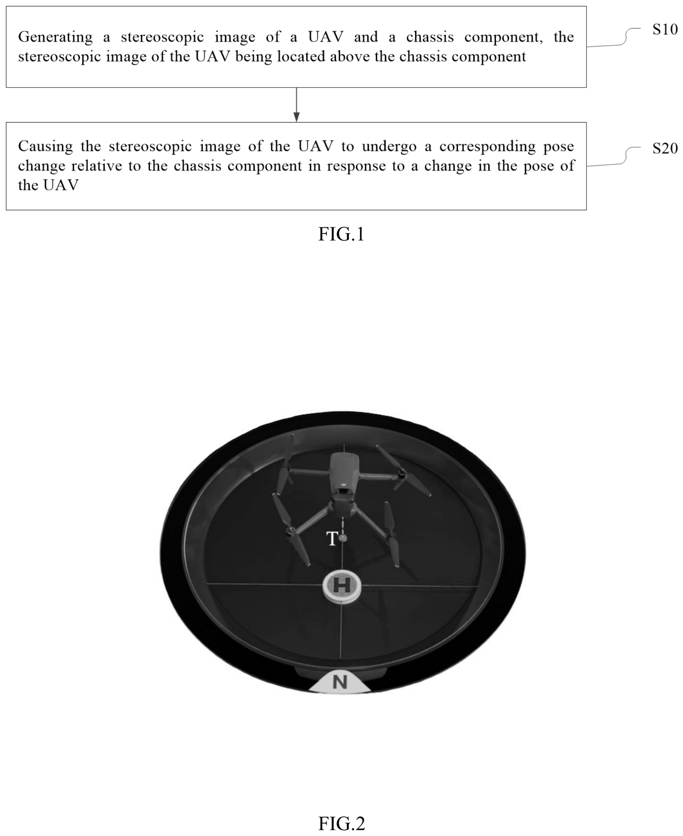

As shown in FIG. 1, an embodiment of the present application provides a method for displaying a pose of a UAV, which is applied to a computer device. The method includes:
S10: Generating a stereoscopic image of the UAV and a chassis component, wherein the stereoscopic image of the UAV is located in a space above the chassis component.

Exemplarily, the stereoscopic image of the UAV may match the actual appearance of the UAV. For example, different stereoscopic images of the UAV of different models and appearances may be generated correspondingly. The chassis component has a three-dimensional shape, and the contour of its top view may be circular, square, polygonal, etc., without limitation in the present application. The chassis component is used to indicate the plane of the ground, so as to show the spatial relationship between the UAV and the ground, thereby more realistically reflecting the pose of the UAV in three-dimensional space. Furthermore, for a remote controller used by the user, or a return point on the ground (for example, a UAV vehicle), corresponding markers may also be provided on the surface of the chassis component, thereby more intuitively showing the relative positional relationship between the UAV and the remote controller, return point, etc.

Exemplarily, the stereoscopic images of the UAV may be pre-generated for UAVs of different models and appearances and stored locally or in the cloud. A 3D image rendering method in the prior art may be used to obtain the stereoscopic image of the UAV, and the present application does not limit the specific algorithm. During use, the system may automatically match the stereoscopic image of the UAV of a corresponding appearance from local or cloud storage according to the model of the currently connected UAV; or may match the stereoscopic image of the UAV of a corresponding appearance from local or cloud storage according to the UAV model input by the user. After obtaining the matched stereoscopic image of the UAV, it may be displayed as a component in the display area of the computer device.

In addition, for the chassis component, multiple chassis components of different shapes may be obtained by using 3D image rendering methods in the prior art, and the specific algorithm is not limited in the present application. During use, a default-shaped chassis component may be configured for the user, or the chassis component may be matched according to the user's selection from multiple shapes.

FIG. 2 shows a schematic diagram of a stereoscopic image of the UAV and a chassis component in the present application. By arranging the stereoscopic image of the UAV in the space above the chassis component, a stereoscopic space can be more intuitively formed. The contour of the top view of the chassis component in this embodiment is circular.

S20: The stereoscopic image of the UAV undergoes a corresponding pose change relative to the chassis component in response to a pose change of the UAV.

Exemplarily, the response to the pose change of the UAV in the present application includes but is not limited to the following situations:
Situation 1: The pose change of the UAV is caused by the user operating the UAV through a remote controller. In this case, the change amount of the pose of the UAV (pitch angle change amount, roll angle change amount, yaw change amount, etc.) may be obtained according to the user's operation on the remote controller, and then the pose of the stereoscopic image of the UAV may be adjusted according to the change amount of the pose of the UAV.
Situation 2: The pose change of the UAV is caused by external wind. In this case, the change amount of the pose of the UAV may be obtained by sensors carried by the UAV, and then the pose of the stereoscopic image of the UAV may be adjusted according to the change amount of the pose of the UAV.
Situation 3: The pose change of the UAV is caused by the user directly touching the stereoscopic image of the UAV. In this case, the pose of the stereoscopic image of the UAV may be adjusted according to the change amount of the pose of the UAV corresponding to the user's touch operation.
Situation 4: The pose change of the UAV is caused by the user inputting pose parameters. In this case, the pose of the stereoscopic image of the UAV may be directly adjusted according to the pose parameters input by the user.

In the embodiment of the present application, by means of the cooperation between the stereoscopic image of the UAV and the chassis component, the stereoscopic display of the UAV pose is realized. Further, by responding to the pose change of the UAV, the change in the pose of the stereoscopic image of the UAV relative to the chassis component is correspondingly controlled, enabling the user to intuitively and accurately understand the pose of the UAV during UAV operation without additional learning, thereby reducing the learning cost.

In some embodiments, changes in the pose of the UAV at least include one of a pitch change, a roll change, and a yaw change of the UAV. Accordingly, in response to the pose change of the UAV, the stereoscopic image of the UAV undergoes a corresponding pose change relative to the chassis component, including:
Controlling the stereoscopic image of the UAV in response to the pitch change thereof to undergo pitch change relative to the chassis component; and/or controlling the stereoscopic image of the UAV in response to the roll change thereof to undergo roll change relative to the chassis component; and/or controlling the yaw change of the stereoscopic image of the UAV in response to the yaw change thereof.

This embodiment controls the stereoscopic image of the UAV to undergo pose changes relative to the chassis component in three dimensions of pitch, roll, and yaw, thereby realizing intuitive display of the pose changes of the stereoscopic image of the UAV in the three-dimensional space, making the pose changes of the UAV during the flight process clear at a glance, providing convenience for user observation, thereby improving user experience.

During the implementation of the present application, the applicant found that it is not easy to observe a stereoscopic image of the UAV if it is small or only undergoes small pose changes. Therefore, the applicant proposes the following optional embodiment, in which the method for displaying a pose of a UAV further includes: generating a pitch indication component in a front space or a rear space of the stereoscopic image of the UAV in response to the pitch change of the UAV, the stereoscopic image varing with a degree of pitch. The pitch indication component includes an upward pitch indication component and a downward pitch indication component. The upward pitch indication component is used to indicate a degree of upward pitch of the UAV, and the downward pitch indication component is used to indicate a degree of downward pitch of the UAV. A 3D rendering algorithm in the prior art may be used to generate the pitch indication component, and the present application does not limit the specific algorithm. In some embodiments, the pitch indication component is an integral component (for example, a band-shaped graphic component), and the upward pitch indication component and the downward pitch indication component are the two opposite ends of the pitch indication component. When the UAV has no pitch angle, the pitch indication component is hidden at the lower surface of the chassis component; when the UAV pitches upward, the upward pitch indication component protrudes from the upper surface of the chassis component, and as an upward pitch angle of the UAV increases, a protruding length of the upward pitch indication component from the upper surface of the chassis component increases; when the UAV pitches downward, the upward pitch indication component retracts below the lower surface of the chassis component, and the downward pitch indication component protrudes from the upper surface of the chassis component. As a downward pitch angle of the UAV increases, a protruding length of the downward pitch indication component from the upper surface of the chassis component increases.

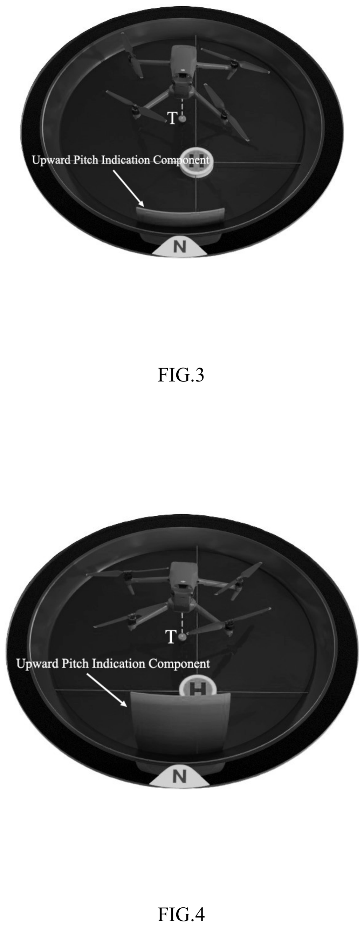

FIG. 3 shows a schematic diagram of an embodiment for displaying the upward pitch degree of the UAV through the upward pitch indication component according to the present application. FIG. 4 shows a schematic diagram of another embodiment for displaying the upward pitch degree of the UAV through the upward pitch indication component according to the present application. The upward pitch indication components in FIG. 3 and FIG. 4 are located in front of the UAV, both protruding upward from the surface of the disk-shaped chassis component. The height of the upward pitch indication component in FIG. 4 is greater than that in FIG. 3, indicating that the stereoscopic image of the UAV in FIG. 4 has a greater upward pitch degree than that in FIG. 3.

As shown in FIGS. 3 and 4, the pitch indication component is an arc-shaped indication band component with a certain width. One end of the arc-shaped indication band component is the upward pitch indication component, and the opposite end is the downward pitch indication component (in the state of FIG. 2, the UAV has no pitch angle, and the pitch indication component is hidden below the chassis component).

Exemplarily, the relationship between the upward pitch angle of the UAV and the height of the upward pitch indication component may be uniformly matched according to the maximum upward pitch angle of the UAV (for example, 90 degrees) and the maximum height of the upward pitch indication component protruding from the upper surface of the chassis component (for example, 1.8 cm). For example, based on the data of 90 degrees and 1.8 cm, it can be determined that for every 1-degree increase in upward pitch angle, the height of the upward pitch indication component increases by 0.02 cm correspondingly.

In some embodiments, with the sphere center corresponding to the arc-shaped indication band component as the center, when the UAV pitches upward or downward at a certain angle, the arc-shaped indication band component is controlled to rotate by the same angle around the sphere center. Exemplarily, the sphere center corresponding to the arc-shaped indication band component is the center of the chassis component. When the UAV pitches upward, the arc-shaped indication band component is controlled to rotate toward the upward pitch indication component; when the UAV pitches downward, the arc-shaped indication band component is controlled to rotate toward the downward pitch indication component.

Similarly, the matching relationship between the downward pitch angle of the UAV and the downward pitch indication component may be determined according to the above method. It should be noted that the above is only exemplary, and the present application does not limit the specific implementation.

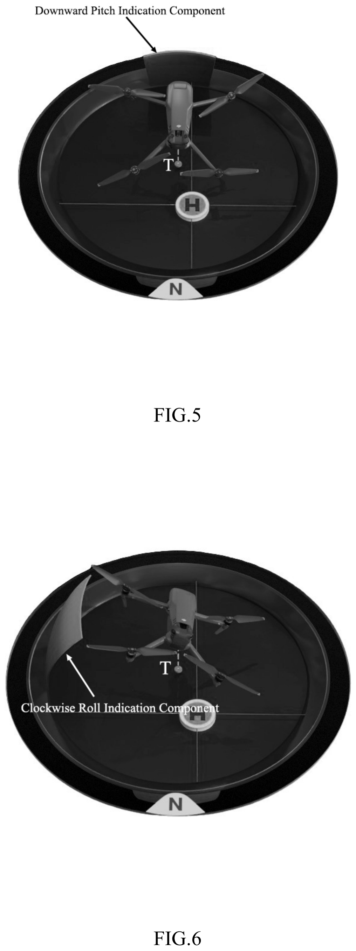

FIG. 5 shows a schematic diagram of an embodiment of displaying the degree of downward pitch of the UAV through the downward pitch indication component according to the present application. The downward pitch indication component in FIG. 5 is located behind the UAV (relative to the front of the UAV in the foregoing embodiment), and grows upward from the surface of the disk-shaped chassis component. In some embodiments, different heights of the downward pitch indication component can be configured to match different downward pitch degrees of the UAV.

It should be noted that the upward pitch indication component and the downward pitch indication component in the above embodiments are merely examples, as long as they facilitate adaptive indication of the upward pitch and downward pitch degrees of the UAV. The present application does not limit the specific forms of the upward pitch indication component and the downward pitch indication component.

In the process of implementing the present application, the applicant found that when the stereoscopic image of the UAV is small or the stereoscopic image of the UAV undergoes only a small range of pose changes, it is not easy to be observed. Therefore, the applicant proposes the following optional embodiments. The method for displaying the pose of the UAV further includes: generating, in response to the roll change of the UAV, a roll indication component in a left-side space or right-side space of the stereoscopic image of the UAV, the roll indication component varying with degree of roll. The roll indication component includes a clockwise roll indication component and a counterclockwise roll indication component. The clockwise roll indication component is used to indicate the degree of the UAV rolling clockwise, and the counterclockwise roll indication component is used to indicate the degree of the UAV rolling counterclockwise. The roll indication component can be generated using 3D rendering algorithms in related prior art, and the present application does not limit specific algorithms. In some embodiments, the roll indication component is an integral component, and correspondingly, the clockwise roll indication component and the counterclockwise roll indication component are opposite ends of the roll indication component. When the UAV has no roll angle, the roll indication component is hidden at the lower surface of the chassis component. When the UAV rolls clockwise, the clockwise roll indication component protrudes from the upper surface of the chassis component, and as a clockwise roll angle of the UAV increases, the length of the clockwise roll indication component protruding from the upper surface of the chassis component increases. When the UAV rolls counterclockwise, the clockwise roll indication component retracts below the lower surface of the chassis component, and the counterclockwise roll indication component protrudes from the upper surface of the chassis component. As a counterclockwise roll angle of the UAV increases, the length of the counterclockwise roll indication component protruding from the upper surface of the chassis component increases.

FIG. 6 shows a schematic diagram of an embodiment of displaying the degree of clockwise roll of the UAV through the clockwise roll indication component according to the present application. The clockwise roll indication component is located on the left side of the stereoscopic image of the UAV in FIG. 6, and grows upward from the surface of the disk-shaped chassis component. In some embodiments, different heights of the clockwise roll indication component can be configured to match different degrees of clockwise roll of the UAV. The greater the degree of roll, the greater the height of the roll indication component.

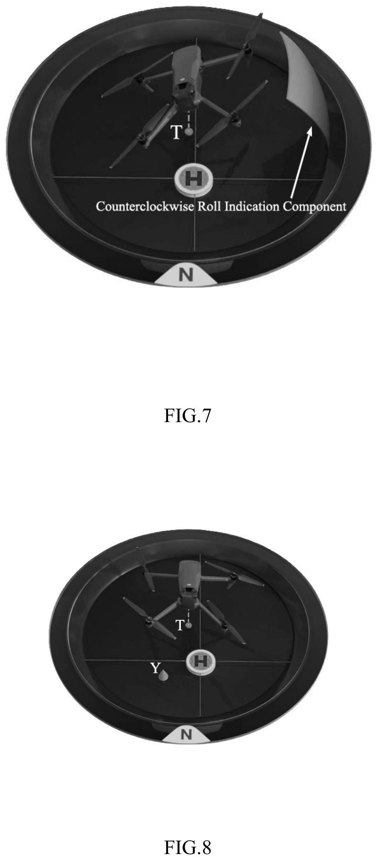

FIG. 7 shows a schematic diagram of another embodiment of displaying the degree of counterclockwise roll of the UAV through the counterclockwise roll indication component according to the present application. The counterclockwise roll indication component is located on the right side of the stereoscopic image of the UAV in FIG. 7, and protrudes upward from the surface of the disk-shaped chassis component. In some embodiments, different heights of the counterclockwise roll indication component can be configured to match different degrees of counterclockwise roll of the UAV. The greater the degree of roll, the greater the height of the roll indication component.

As shown in FIGS. 6 and 7, the roll indication component is an arc-shaped indication band component with a certain width, one end of which is the clockwise roll indication component, and the opposite end of which is the counterclockwise roll indication component (in the state of FIG. 2, the UAV has no roll angle, and at this time the roll indication component is hidden beneath the chassis component).

Exemplarily, the relationship between the roll angle of the UAV and the height of the clockwise roll indication component can be evenly matched according to the maximum clockwise roll angle of the UAV (for example, 90 degrees) and the maximum height of the clockwise roll indication component protruding from the upper surface of the chassis component (for example, 1.8 cm). For example, according to the data of 90 degrees and 1.8 cm, it can be determined that for each 1-degree increase in roll angle, the corresponding height of the clockwise roll indication component increases by 0.02 cm. Similarly, the matching relationship between the counterclockwise roll angle of the UAV and the counterclockwise roll indication component can be determined. It should be noted that the above is merely an example, and the present application does not limit the specific implementation.

In some embodiments, with the sphere center corresponding to the arc-shaped indication band component as the center, when the UAV undergoes a certain angle of clockwise roll or counterclockwise roll, the arc-shaped indication band component is controlled to rotate at the same angle around the sphere center. When the UAV rolls clockwise, the arc-shaped indication band component is controlled to rotate toward the clockwise roll indication component end; when the UAV rolls counterclockwise, the arc-shaped indication band component is controlled to rotate toward the counterclockwise roll indication component end.

It should be noted that the clockwise roll indication component and the counterclockwise roll indication component in the above embodiments are merely examples, as long as they facilitate adaptive indication of the roll degree of the UAV. The present application does not limit the specific forms of the clockwise roll indication component and the counterclockwise roll indication component.

In some embodiments, when the UAV simultaneously undergoes pitch and roll, the pitch indication component and the roll indication component are correspondingly displayed simultaneously on the chassis component. To facilitate distinguishing and observing by the user more intuitively, different colors can be configured for the pitch indication component and the roll indication component.

Further, when the UAV simultaneously undergoes pitch and roll, the roll condition of the UAV can be reflected by setting the height difference between two sides of the end of the pitch indication component protruding from the upper surface of the chassis component; and/or, the pitch condition of the UAV can be reflected by setting the height difference between two sides of the end of the roll indication component protruding from the upper surface of the chassis component.

For example, when the UAV has an upward pitch angle and a clockwise roll angle, the left side of the corresponding upward pitch indication component is higher than the right side, and the front side of the clockwise roll indication component is lower than the rear side. The same applies to other cases, which will not be repeated here.

In this embodiment, the pose condition of the UAV in two dimensions is indicated through the same type of indication component (pitch indication component or roll indication component), facilitating the user to understand the pose condition of the UAV from more angles.

Further, in order to achieve an intuitive display of the yaw change of the UAV, the following optional embodiment is proposed, namely, providing a direction marker on the edge of the chassis component. Correspondingly, controlling the yaw change of the stereoscopic image of the UAV in response to the yaw change of the UAV includes: controlling the change in the position of the direction marker relative to the stereoscopic image of the UAV in response to the yaw change of the UAV. Exemplarily, the relative position between the stereoscopic image of the UAV and the chassis component can be kept unchanged, and the position change of the direction marker relative to the stereoscopic image of the UAV can be realized by controlling the position change of the direction marker on the edge of the chassis component; or the direction marker can be kept unchanged on the edge of the chassis component, and the position change of the direction marker relative to the stereoscopic image of the UAV can be realized through rotation of the chassis component.

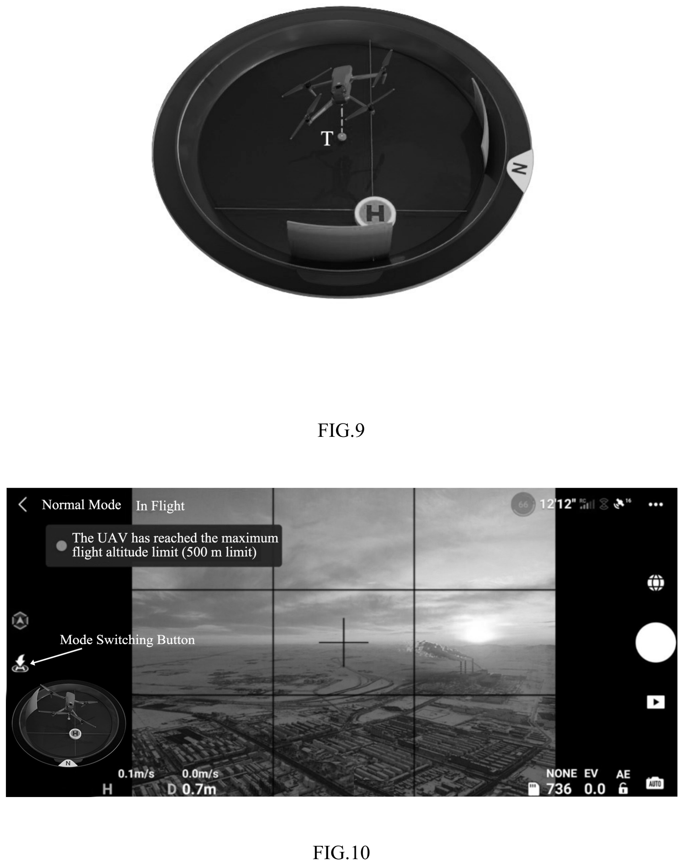

FIG. 8 shows a schematic diagram of an embodiment of providing a direction marker on the chassis component according to the present application, and FIG. 9 shows a schematic diagram of another embodiment of providing a direction marker on the chassis component according to the present application. The direction marker "N" in FIGS. 8 and 9 is located at different positions on the edge of the chassis component to indicate the yaw change of the UAV. As shown in FIG. 8, one end of the UAV with a camera faces north (the direction corresponding to the direction marker "N"), and as shown in FIG. 9, one end of the UAV with a camera faces west (the left side of the direction marker "N"). If the UAV changes its yaw from the orientation in FIG. 8 to the orientation in FIG. 9, the orientation of the UAV relative to the user remains unchanged during the change process. The direction marker "N" is controlled to gradually move along the edge of the chassis component from the position directly opposite the UAV to the right-side position of the UAV (that is, moving in the direction opposite to the yaw of the UAV).

In this embodiment, the orientation of the UAV relative to the user is kept unchanged, and the display of the yaw change of the UAV is realized by changing the position of the direction marker relative to the stereoscopic image of the UAV. In this way, the yaw change of the UAV is presented from the first-person perspective of the user, which better conforms to the user's observation habits and facilitates obtaining the yaw change of the UAV by the user more intuitively and accurately.

In some embodiments, the position change of the return point marker is controlled with the stereoscopic image of the UAV as the center to display the position change of the UAV. One optional implementation is as follows.

As shown in FIGS. 2 and 3, a return point marker H is provided on the upper surface of the chassis component. In some embodiments, the method for displaying the pose of the UAV further includes: keeping the position of the stereoscopic image of the UAV unchanged relative to the chassis component while controlling the return point marker H to undergo a corresponding position change on the surface of the chassis component in response to the position change of the UAV and/or the position change of the return point. Here, the return point can be fixed (for example, the fixed take-off position of the UAV), or it can be movable (for example, in an application scenario of a vehicle-mounted UAV, the vehicle is the movable return point).

Exemplarily, when a user controls the UAV to undergo a position change through a computer device (for example, a remote controller), the stereoscopic image of the UAV in the display interface of the corresponding computer device maintains an unchanged position relative to the chassis component, and the return point marker H is controlled to undergo a corresponding position change on the surface of the chassis component (for example, the position information of the UAV and the position information of the return point are acquired, and the relative position relationship between them is calculated, which includes direction, distance, height, etc. Then, according to the prestored transformation relationship between the three-dimensional spatial coordinates and the image spatial coordinates, conversion calculation is performed based on the relative position relationship between the UAV and the return point to obtain the relative position relationship between the stereoscopic image of the UAV and the return point marker H. Further, by combining the position information of the stereoscopic image of the UAV, the position information of the return point marker H is obtained to control the return point marker H to move to the corresponding position). Alternatively, in an in-vehicle UAV scenario, when the UAV is in a hovering state and the user drives the vehicle to travel, the stereoscopic image of the UAV in the display interface of the corresponding computer device maintains an unchanged position relative to the chassis component, and the return point marker H corresponding to the vehicle is controlled to undergo a corresponding position change on the surface of the chassis component. For example, a mapping point of the UAV is set on the surface of the chassis component. According to the relative position relationship between the projected position of the UAV on the ground and the position of the vehicle on the ground, the relative position relationship between the mapping point of the UAV on the surface of the chassis component and a vehicle marker is determined. Then, according to the fixed known position of the mapping point, the above relative position relationship, and the prestored transformation relationship between the three-dimensional spatial coordinates and the image spatial coordinates, the position of the vehicle marker is calculated, thereby controlling the return point marker H corresponding to the vehicle to move to the corresponding position. Alternatively, in an in-vehicle UAV scenario, when the vehicle is in a driving state and the user controls the UAV to change position through a computer device, the stereoscopic image of the UAV in the display interface of the corresponding computer device maintains an unchanged position relative to the chassis component, and the return point marker is controlled to undergo a corresponding position change on the surface of the chassis component.

In this embodiment, the stereoscopic image of the UAV is always maintained at an unchanged position relative to the chassis component, and only by changing the position of the return point marker H on the chassis component, the relative position change of the UAV relative to the return point is reflected. The user only needs to observe the relative position relationship between the stereoscopic image of the UAV and the return point marker H to intuitively learn the position relationship of the UAV relative to the return point.

As shown in FIG. 2, the stereoscopic image of the UAV is located directly in front of the return point marker H, whereby the user can intuitively understand that the current UAV is located in the airspace directly in front of the return point (for example, the vehicle). As shown in FIG. 3, the stereoscopic image of the UAV is located to the left front of the return point marker H, whereby the user can intuitively learn that the current UAV is located in the airspace to the left front of the return point (for example, the vehicle).

In some embodiments, a UAV mapping point T is further provided on the upper surface of the chassis component, which is always maintained at a fixed position on the chassis component (for example, the UAV mapping point T is located at the center position of the chassis component), so as to show that the stereoscopic image of the UAV maintains an unchanged position relative to the chassis component.

In this embodiment, by providing the UAV mapping point on the upper surface of the chassis component, and with the return point marker H located on the same display plane, it is more convenient for the user to intuitively understand the orientation of the UAV relative to the return point by the relative position relationship between the UAV mapping point and the return point marker H.

Further, in order to facilitate more accurately grasping of the UAV orientation relative to the return point by the user, the upper surface of the chassis component is divided into 4 quadrants with the return point as the center by auxiliary lines (as shown in FIGS. 2 to 9, transverse auxiliary lines and longitudinal auxiliary lines passing through the return point marker H). In this way, by observing the quadrant in which the UAV mapping point is located, the orientation of the UAV relative to the return point can be quickly and accurately determined.

In some embodiments, the position change of the stereoscopic image of the UAV is controlled with the return point marker as the center to show the position change of the UAV. An optional implementation is as follows.

A return point marker is provided on the surface of the chassis component. The method further includes: in response to a position change of the UAV and/or a position change of the return point, the position of the return point marker on the surface of the chassis component remains unchanged, while the stereoscopic image of the UAV is controlled to undergo a corresponding position change relative to the return point marker. Here, the return point may be fixed (for example, the fixed position where the UAV takes off) or movable (for example, in an in-vehicle UAV application scenario, the vehicle is a movable return point).

Exemplarily, the return point marker is located at the center of the chassis component and remains unchanged. By controlling the position change of the stereoscopic image of the UAV relative to the return point marker, the position change of the UAV relative to the return point is reflected.

In some embodiments, the position change of the UAV mapping point T is controlled with the return point marker as the center to show the position change of the UAV. An optional implementation is as follows.

The surface of the chassis component is provided with the return point marker H and the UAV mapping point T. The method further includes: in response to a position change of the UAV and/or a position change of the return point, the position of the return point marker on the surface of the chassis component remains unchanged, while the UAV mapping point T is controlled to undergo a corresponding position change relative to the return point marker. Here, the return point may be fixed (for example, at the fixed position where the UAV takes off) or movable (for example, in an in-vehicle UAV application scenario, the vehicle is a movable return point).

Exemplarily, the return point marker is located at the center of the chassis component and remains unchanged. By controlling the position change of the UAV mapping point T relative to the return point marker, the position change of the UAV relative to the return point is reflected.

In some application scenarios, the user controls the UAV to fly out from a preset take-off/return point through a remote controller, but the user is not at the take-off/return point (for example, in an in-vehicle UAV application scenario, after the user controls the UAV to take off from the vehicle through a handheld remote controller, the user leaves the vehicle and goes to another place). At this time, when displaying the pose of the UAV, it is necessary to consider the pose of the UAV relative to the remote controller. To this end, the applicant proposes the following embodiment.

With the stereoscopic image of the UAV as the center, the position change of a remote controller marker is controlled to show the position change of the UAV. An optional implementation is as follows.

FIG. 8 shows another schematic diagram of displaying the pose of the UAV according to the present application. In this embodiment, a remote controller marker Y is provided on the surface of the chassis component. The method for displaying the pose of the UAV further includes: the stereoscopic image of the UAV maintains an unchanged position relative to the chassis component, while the remote controller marker Y is controlled to undergo a corresponding position change on the surface of the chassis component in response to a position change of the UAV and/or a position change of the remote controller.

In this embodiment, by maintaining the stereoscopic image of the UAV unchanged relative to the chassis component, and controlling the position change of the remote controller marker Y on the upper surface of the chassis component, the relative position relationship between the UAV and the remote controller is reflected. Thus, the orientation relationship between the UAV and the remote controller is displayed in a manner of controlling the remote controller marker Y to move with the stereoscopic image of the UAV as the center.

As shown in FIG. 8, in some embodiments, the return point marker H and the remote controller marker Y are provided on the surface of the chassis component to display the relative position relationship between the return point and the remote controller. As mentioned in the above embodiments, when the user controls the UAV to take off from the vehicle (which also serves as the return point) through the remote controller, the user can leave the vehicle with the handheld remote controller. Through this embodiment, the relative position relationship between the user holding the remote controller and the vehicle can be intuitively displayed. Especially when the distance between them is relatively far, the personnel in the return point vehicle or the autonomous vehicle can drive the vehicle to the position of the remote controller according to the position relationship, without necessity of moving back and forth by the operator of the remote controller. Alternatively, when the operator of the remote controller has not operated the UAV for a long time, the remote controller marker disappears; or when the remote controller position reaches a certain dangerous area (for example, a dangerous area such as a cliff edge or an accident site obtained through a prestored map or identified from images taken by the UAV), or when the personnel at the return point want to confirm whether the operator of the remote controller is safe, that is, when a preset movement condition is met, it is possible to drive to check according to the position, or directly control the UAV to reach position Y to take photos to check.

In some embodiments, the position change of the stereoscopic image of the UAV is controlled with the remote controller marker as the center to show the position change of the UAV. An optional implementation is as follows.

The remote controller marker is provided on the surface of the chassis component. The above method further includes: in response to a position change of the UAV and/or a position change of the remote controller, the position of the remote controller marker on the surface of the chassis component remains unchanged, and the stereoscopic image of the UAV is controlled to undergo a corresponding position change relative to the remote controller marker.

In this embodiment, by maintaining the remote controller marker unchanged relative to the chassis component, and controlling the position change of the stereoscopic image of the UAV above the chassis component, the relative position relationship between the UAV and the remote controller is reflected. Thus, the orientation relationship between the UAV and the remote controller is displayed in a manner of controlling the stereoscopic image of the UAV to move with the remote controller marker as the center. This embodiment is particularly suitable for such a situation where the remote controller operator's perspective is the operator's habitual perspective, which can more intuitively reflect the position relationship between the UAV mapping point, the return point, and the remote controller, and is more convenient for operating the UAV.

In some embodiments, the method of displaying the pose of the UAV further includes: controlling a size change of the stereoscopic image of the UAV in response to a position change of the UAV. The farther the UAV is from the return point, the smaller the stereoscopic image of the UAV.

As shown in the stereoscopic image of the UAV in FIGS. 8 and 9, the stereoscopic image of the UAV in FIG. 9 is smaller than that in FIG. 8. This indicates that in the state shown in FIG. 9, the UAV is farther from the return point compared with FIG. 8. By controlling the size of the stereoscopic image of the UAV according to the change in distance between the UAV and the return point, the change in the distance of the UAV can be dynamically reflected.

In some embodiments, the method of displaying the pose of the UAV further includes: correspondingly controlling the UAV in response to a user's control operation on the stereoscopic image of the UAV.

Exemplarily, the control operations by the user on the stereoscopic image of the UAV include but are not limited to at least one of: single-click, double-click, single-point touch, multi-point touch, long-press touch, drag touch, and air gesture operations. Through the above control operations, the stereoscopic image of the UAV can be selected and manipulated. For example, the stereoscopic image of the UAV can be selected by single-clicking, double-clicking, or long-press touch, and the stereoscopic image of the UAV can be dragged to the desired position by drag touch (correspondingly generating a command to control the UAV and implementing remote control of the UAV). The pose of the stereoscopic image of the UAV can be adjusted by single-point touch/sliding along a certain direction (correspondingly generating a command to control the UAV for pose change, achieving remote pose control of the UAV), for example, adjusting the pitch, roll, and yaw of the stereoscopic image of the UAV through single-point touch, or controlling the pitch of the UAV by sliding up and down, controlling the roll of the UAV by sliding left and right, controlling the yaw of the UAV by sliding in a clockwise or counterclockwise direction; by multi-point touch (for example, two fingers), the stereoscopic image of the UAV can be enlarged or reduced, correspondingly generating control commands for the UAV to fly closer or farther, and implementing flight control of the UAV. The pose of the stereoscopic image of the UAV can be adjusted by air gesture operations, for example, controlling the roll posture of the stereoscopic image of the UAV by moving the hand left and right, controlling the pitch posture of the stereoscopic image of the UAV by moving the hand up and down, or controlling the yaw of the UAV by drawing clockwise or counterclockwise arcs. It should be noted that the above is merely an exemplary illustration of control operations, and the present application does not limit specific implementation forms.

In some embodiments, the method for displaying the pose of the UAV further includes: adjusting the UAV to a preset pose in response to a user operation on a pose adjustment shortcut component; or, controlling the pose of the UAV in response to the pose data input by the user.

Exemplarily, a pose adjustment shortcut component for the user to control the pose of the UAV is provided in the display interface, and the user can directly click the pose adjustment shortcut component to quickly and accurately adjust the pose of the UAV. The pose adjustment shortcut component can be an independent virtual button corresponding to preset pose data (for example, at least one of the corresponding pitch angle, roll angle, and yaw angle is preset). The pose adjustment shortcut component can also include multiple independent virtual buttons corresponding to multiple sets of preset pose data. The pose adjustment shortcut component can also form a drop-down list after being clicked, and the drop-down list includes multiple sets of selectable pose data. The preset pose data can be the pose data corresponding to a default pose; or the preset pose data can be the pose data corresponding to a pose at the last moment before return; or the preset pose data can be the pose data corresponding to the most frequently used pose obtained according to the analysis of user operation habits. The above are merely exemplary implementations of the pose shortcut component, and the present application does not limit the above.

In addition, the user can also manually input the required pose data to more accurately control the pose of the UAV as needed. For example, the user can perform a preset operation on the stereoscopic image of the UAV to trigger an information input interface, and the user can input the desired pose data in the information input interface.

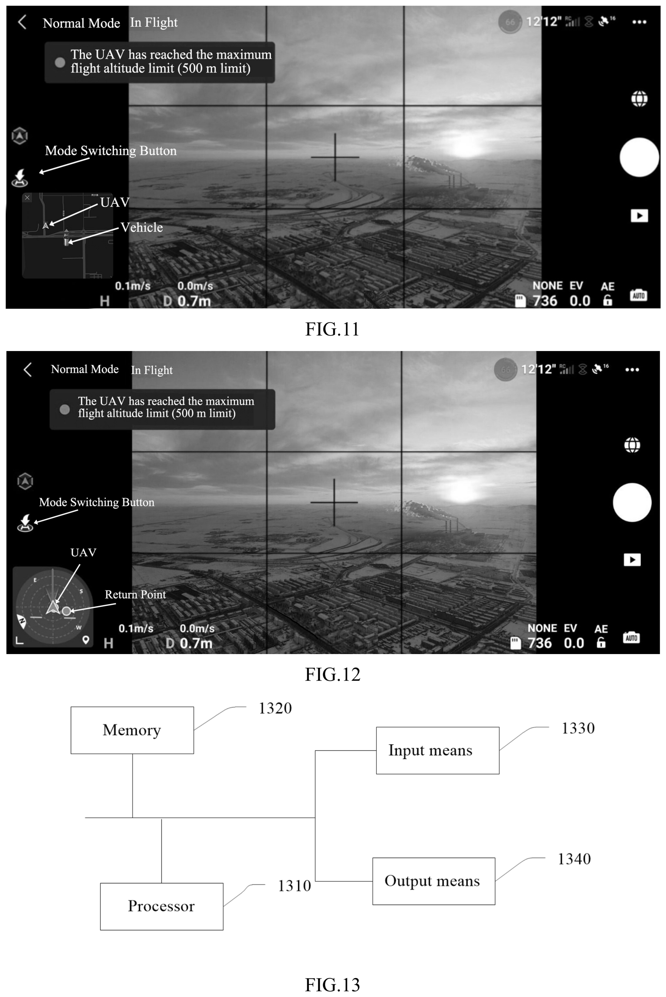

In some embodiments, the method for displaying the pose of the UAV further includes: controlling the computer device to switch from a first display mode to a second display mode in response to a user's display mode switching operation; when the first display mode is a two-dimensional display mode, the second display mode is a three-dimensional display mode; when the first display mode is a three-dimensional display mode, the second display mode is a two-dimensional display mode. The display mode switching operation can be based on user touch operations on the display interface, predetermined gestures performed by the user, or the user's voice commands, etc., and the present application does not limit the specific form. The three-dimensional display mode shows the stereoscopic image of the UAV and the chassis component as shown in FIG. 10, and the two-dimensional display mode shows the two-dimensional UAV icon and the two-dimensional map/two-dimensional chassis as shown in FIGS. 11 and 12, the specific content of which will be described in subsequent embodiments and is not described here.

The embodiments of the present application further provide a computer device, including a memory, a processor, and a computer program stored in the memory. The processor executes the computer program to implement the steps of the method for displaying the pose of the UAV in any embodiment of the present application. The computer device can be a UAV remote controller, a smartphone, a tablet, an in-vehicle electronic device, a VR device, etc., which are not limited in the present application.

In some embodiments, the computer device is configured with a display module including a first display area and a second display area. The first display area is configured to display the pose of the UAV, and the second display area is configured to display the images captured by the UAV.

FIG. 10 is a schematic diagram of the display interface of an embodiment of the display module of the computer device in the present application. The lower-left corner of the display interface shows the pose of the UAV in 3D form, which can display the pose of the UAV according to the method of the above embodiment. The main imaging area of the display interface shows the real scene captured by the UAV. In some embodiments, the first display area and/or the second display area display flight data of the UAV, including: attitude data, distance from the return point, UAV altitude, latitude and longitude information, etc.

In some embodiments, the processor is further configured to, in response to a user's display mode switching operation, control the first display area to switch from the first display mode to the second display mode. When the first display mode is a two-dimensional display mode, the second display mode is a three-dimensional display mode; when the first display mode is a three-dimensional display mode, the second display mode is a two-dimensional display mode.

Exemplarily, the user can switch the first display area from the first display mode to the second display mode by clicking a preset mode switching button, such as the mode switching button shown on the left side in FIGS. 10 and 11. For example, in the state shown in FIG. 10, pressing the mode switching button can switch the display mode to the state shown in FIG. 11. In the state shown in FIG. 11, pressing the mode switching button can switch the display mode to the state shown in FIG. 10.

FIG. 11 is a schematic diagram of the display interface of another embodiment of the display module of the computer device in the present application. This embodiment corresponds to an in-vehicle UAV application scenario. The lower-left corner of the display interface is presented in the form of a two-dimensional map, and icons of the UAV and the vehicle are also marked, indicating the relative position relationship between the actual UAV and the vehicle through the relative position relationship between the UAV icon and the vehicle icon. The main imaging area of the display interface shows the real scene captured by the UAV. This embodiment not only facilitates user's understanding of the relative position of the UAV with respect to the vehicle, but also allows the user to understand the real-time traffic situation on the ground, and use the two-dimensional map to implement vehicle navigation. The generation method of the two-dimensional map includes but is not limited to obtaining a two-dimensional map containing the vehicle's position through the vehicle's navigation map. Further, the position information of the UAV (for example, latitude and longitude information projected onto the ground) is obtained, and then a UAV marker is provided at the corresponding position on the two-dimensional map according to this position information.

In some embodiments, switching between the display modes can also be automatically conducted according to preset conditions. The preset conditions may include, for example, the distance between the UAV and the vehicle being greater than a preset threshold, at which point switching between the display modes is automatically conducted to more intuitively reflect the distance and direction between the UAV and the vehicle. When the distance is too far, due to the limited display area, the 3D view is less capable of showing the change in distance therebetween, and using a map or two-dimensional representation is more intuitive.

FIG. 12 is a schematic diagram of the display interface of another embodiment of the display module of the computer device in the present application. The lower-left corner of the display interface shows the UAV marker and return point marker in two-dimensional form. The main imaging area of the display interface shows the real scene captured by the UAV. As shown in FIG. 12, in this embodiment, the UAV is taken as the center, the return point is taken as a relative moving point, and a two-dimensional view showing the relative pose of the UAV and the return point is generated. When the position of the UAV changes, the position of the UAV marker in the two-dimensional view is maintained unchanged, and the return point marker is controlled to undergo a corresponding position change. The two-dimensional view is also marked with the four directions of East, South, West, and North (E, S, W, N) for orientation.

In some embodiments, when a preset condition is met (for example, the distance between the UAV and the return point is greater than a preset threshold) or in response to the user's pressing the mode switching button shown in FIG. 10, the display mode switches to the display mode shown in FIG. 12. The two-dimensional display mode in this embodiment is conducive to displaying the relative position relationship between the UAV and the return point at longer distances. In actual operation, the display mode shown in FIG. 10 is used when the UAV takes off. As the UAV flies farther, the 3D display mode shown in FIG. 10 is no longer sufficient to clearly display the relative position of the UAV with respective to the return point. At this time, the display can switch to the two-dimensional display mode shown in FIG. 12 in response to the meeting of the preset condition or the user's clicking the mode switching button, to more intuitively understand the orientation of the UAV relative to the return point.

In some embodiments, the processor is configured to, when receiving a movement command or detecting that the preset movement condition is met, control the UAV to fly to the remote controller based on the relative position relationship between the UAV and the remote controller and capture images of the location of the remote controller; or, when receiving the movement command or detecting that the preset movement condition is met, control the UAV vehicle to move toward the remote controller based on the relative position relationship between the UAV vehicle and the remote controller and capture images of the location of the remote controller. The processor can communicate with the remote controller and the UAV.

The embodiments of the present application further provide a computer-readable storage medium, storing computer programs and/or instructions, which when executed by a processor, implement the steps of the method for displaying the pose of the UAV in any embodiment of the present application.

The embodiments of the present application further provide a computer program product, including computer programs and/or instructions, which when executed by a processor, implement the steps of the method for displaying the pose of the UAV in any embodiment of the present application.

The embodiments of the present application further provide a UAV vehicle, including the computer device of any embodiment of the present application. The UAV vehicle is further configured to carry a UAV. For example, the UAV vehicle is provided with a helipad for parking the UAV, the computer device in communication with the UAV, and a display device that can display the pose of the UAV. The display device can be the same device as the computer device. The UAV vehicle includes but is not limited to automobiles and robots. Taking an automobile as an example, an applicable scenario is an in-vehicle UAV scenario. In the in-vehicle UAV application scenario, the 3D display mode of the pose of the UAV in the above embodiments can be presented on the vehicle screen, and can also be displayed on a handheld remote controller with a display or a user terminal bound to the UAV. In this way, the operator of the UAV can hold the remote controller away from the vehicle to operate the UAV, while the personnel in the vehicle can also learn in real time the pose of the UAV, the position relationship between the UAV and the vehicle, the position relationship between the UAV and the remote controller, and the position relationship between the vehicle and the remote controller, etc.

Further, when the computer device of the UAV vehicle receives a movement command or detects that a preset movement condition is met, it controls the UAV to fly to the remote controller and capture images at the location of the remote controller based on the relative position relationship between the UAV and the remote controller; or, when the computer device of the UAV vehicle receives a movement command or detects that the preset movement condition is met, it controls the UAV vehicle to move toward the remote controller and capture images at the location of the remote controller based on the relative position relationship between the UAV vehicle and the remote controller. For example, the movement command may be a driver operation command or a pick-up command remotely sent by the operator of the remote controller; the preset movement condition may include the operator of the remote controller not moving for a long time, or the remote controller mark disappearing, or the remote controller reaching a certain dangerous area.

For the sake of simplicity, the above method embodiments are illustrated as a series of combined actions. However, those skilled in the art should be aware that the present application is not limited by the order of actions described. According to the present application, certain steps can be performed in other orders or simultaneously. Secondly, those skilled in the art should also understand that the embodiments described in the specification may be preferred embodiments, and the actions and modules involved may not necessarily be essential to the present application. In the above embodiments, the descriptions of each embodiment are focused differently. For the parts not detailed in one embodiment, reference may be made to the related descriptions of other embodiments.

FIG. 13 is a schematic diagram of the hardware structure of a computer device provided in another embodiment of the present application for executing the method of displaying the pose of the UAV. As shown in FIG. 13, the device includes:
one or more processors 1310 and a memory 1320, with one processor 1310 shown as an example in FIG. 13. The device for executing the method of displaying the pose of the UAV may further include an input unit 1330 and an output unit 1340. The processor 1310, memory 1320, input unit 1330, and output unit 1340 may be connected via a bus or other means. In FIG. 13, connection via a bus is shown as an example.

The memory 1320, as a non-volatile computer-readable storage medium, stores non-volatile software programs, non-volatile computer-executable programs, and modules, such as program instructions and/or modules corresponding to the method of displaying the pose of the UAV in the embodiments of the present application. The processor 1310, by running the non-volatile software programs, instructions, and modules stored in the memory 1320, executes various functional applications and data processing of a server, thereby implementing the method of displaying the pose of the UAV of the above-described embodiments. The memory 1320 may include a program storage area and a data storage area. The program storage area may store an operating system and an application required for at least one function. The data storage area may store data created by the device for displaying the pose of the UAV, etc. In addition, the memory 1320 may include high-speed random access memory and may further include non-volatile memory, such as at least one disk storage device, flash memory device, or other non-volatile solid-state storage device. In some embodiments, the memory 1320 may optionally include memory remotely set relative to the processor 1310. These remote memories can be connected to the device for displaying the pose of the UAV via a network. The network includes but is not limited to the Internet, intranet, local area network, mobile communication network, or any combination thereof.

The input unit 1330 may receive input digital or character information and generate signals related to user settings and function control of the device for displaying the pose of the UAV. The output unit 1340 may include a display or other display equipment. One or more modules are stored in the memory 1320, and when executed by one or more processors 1310, they execute the method of displaying the pose of the UAV according to the above-described embodiments.

The above-mentioned product can execute the method of the embodiments of the present application and possesses the corresponding functional modules and beneficial effects of the method. Technical details not described in this embodiment may refer to the methods provided in other embodiments of the present application.

The computer device in the embodiments of the present application may exist in various forms, including but not limited to:
(1) Mobile communication devices, which are characterized by having mobile communication functions and are mainly aimed at providing voice and data communication. Such terminals may include smartphones (e.g., iPhone), multimedia phones, feature phones, and entry-level phones, etc.
(2) Ultra-mobile personal computer devices, which belong to the category of personal computers with computing and processing capabilities, and generally also have mobile internet access features. Such terminals include PDAs, MIDs, UMPC devices, etc., for example, iPad.
(3) Portable entertainment devices, which can display and play multimedia content. Examples may include audio and video players (such as iPods), handheld gaming consoles, e-readers, smart toys, and portable vehicle navigation systems.
(4) Other electronic devices with data interaction functions.

The device embodiments described above are merely illustrative. The units described as separate components may or may not be physically separated, and the components shown as units may or may not be physical units-that is, they may reside in a single location or be distributed across multiple network units. Depending on practical requirements, some or all the modules may be selected to achieve the objectives of this embodiment.

From the description of the above embodiments, those skilled in the art can understand that the embodiments can be implemented by software combined with a general hardware platform, and of course, may also be implemented in hardware. Based on this understanding, the essence of the above technical solutions, or the portion contributing to the related art, can be embodied in the form of a software product. The computer software product may be stored in a computer-readable storage medium, such as ROM/RAM, magnetic disk, optical disc, etc., and includes several instructions for causing a computer device (which may be a personal computer, server, or network device, etc.) to execute the methods of all or part of the embodiments.

Finally, it should be noted that the above embodiments only illustrate the technical solutions of the present application, rather than limiting them. Although the present application has been described in detail with reference to the above embodiments, those skilled in the art should understand that modifications can be made to the technical solutions described in each embodiment, or some technical features can be equivalently replaced. Such modifications or replacements do not cause the essence of the corresponding technical solutions to depart from the scope of the technical solutions of the embodiments of the present application.

## Claims

1. A method for displaying a pose of a UAV, comprising:
generating a stereoscopic image of the UAV and a chassis component, wherein the stereoscopic image of the UAV is in a space above the chassis component; and
causing the stereoscopic image of the UAV to undergo a corresponding pose change relative to the chassis component in response to a pose change of the UAV.

2. The method according to claim 1, wherein the pose change of the UAV comprises at least one of a pitch change, a roll change, and a yaw change of the UAV; and
causing the stereoscopic image of the UAV to undergo a corresponding pose change relative to the chassis component in response to the pose change of the UAV comprising:
controlling the stereoscopic image of the UAV to undergo a pitch change relative to the chassis component in response to the pitch change of the UAV; and/or
controlling the stereoscopic image of the UAV to undergo a roll change relative to the chassis component in response to the roll change of the UAV; and/or
controlling a yaw change of the stereoscopic image of the UAV in response to the yaw change of the UAV.

3. The method according to claim 2, further comprising: generating, in response to the pitch change of the UAV, a pitch indication component varying with a degree of pitch in a front space or rear space of the stereoscopic image of the UAV.

4. The method according to claim 2, further comprising: generating, in response to the roll change of the UAV, a roll indication component varying with a degree of roll in a left-side space or right-side space of the stereoscopic image of the UAV.

5. The method according to claim 2, wherein an edge of the chassis component is provided with a direction marker; and
controlling a yaw change of the stereoscopic image of the UAV in response to the yaw change of the UAV comprises:
controlling the direction marker to undergo a positional change relative to the stereoscopic image of the UAV in response to the yaw change of the UAV.

6. The method according to any one of claims 1 to 5, wherein a surface of the chassis component is provided with a return point marker, and the method further comprises:
keeping the position of the stereoscopic image of the UAV unchanged relative to the chassis component in response to a change in the position of the UAV and/or a change in the position of a return point, and controlling the return point to undergo a corresponding positional change on the surface of the chassis component.

7. The method according to claim 6, wherein the surface of the chassis component is provided with a remote controller marker, and the method further comprises:
keeping the position of the stereoscopic image of the UAV unchanged relative to the chassis component in response to a change in the position of the UAV and/or a change in the position of a remote controller, and controlling the remote controller marker to undergo a corresponding positional change on the surface of the chassis component.

8. The method according to any one of claims 1 to 5, wherein a surface of the chassis component is provided with a return point marker, and the method further comprises:
keeping the position of the return point unchanged on the surface of the chassis component in response to a change in the position of the UAV and/or a change in the position of a return point, and controlling the stereoscopic image of the UAV to undergo a corresponding positional change relative to the return point.

9. The method according to claim 8, wherein the surface of the chassis component is provided with a remote controller marker, and the method further comprises:
keeping the position of the remote controller marker unchanged on the surface of the chassis component in response to a change in the position of the UAV and/or a change in the position of the remote controller, and controlling the stereoscopic image of the UAV to undergo a corresponding positional change relative to the remote controller marker.

10. The method according to any one of claims 1 to 5, further comprising:
controlling a change in size of the stereoscopic image of the UAV in response to a change in the position of the UAV, and
wherein the farther the position of the UAV is from a return point, the smaller the stereoscopic image of the UAV.

11. The method according to any one of claims 1 to 5, further comprising:
controlling the UAV in response to a user's control operation on the stereoscopic image of the UAV.

12. The method according to any one of claims 1 to 5, further comprising:
adjusting the UAV to a preset pose in response to a user's operation on a pose adjustment shortcut component.

13. The method according to any one of claims 1 to 5, further comprising:
controlling the pose of the UAV in response to pose data input by a user.

14. The method according to any one of claims 1 to 5, further comprising:
controlling a computer device to switch from a first display mode to a second display mode in response to a user's display mode switching operation or in response to satisfaction of preset conditions,
wherein when the first display mode is a two-dimensional display mode, the second display mode is a three-dimensional display mode, and when the first display mode is the three-dimensional display mode, the second display mode is the two-dimensional display mode.

15. A computer device comprising a memory, a processor, and a computer program stored in the memory, wherein the processor executes the computer program to implement the steps of the method according to any one of claims 1 to 14.

16. The computer device according to claim 15, wherein the computer device is configured with a display module, and the display module comprises a first display area and a second display area,
wherein the first display area is used to display the pose of the UAV, and the second display area is used to display images captured by the UAV.

17. The computer device according to claim 16, wherein the first display area and/or the second display area display flight data of the UAV.

18. The computer device according to claim 15, wherein the processor is configured to:
when receiving a movement instruction or detecting that a preset movement condition is met, control the UAV to fly toward a remote controller and capture an image of a location of the remote controller based on a relative position relationship between the UAV and the remote controller; or
when receiving a movement instruction or detecting that a preset movement condition is met, control a UAV vehicle to move toward a remote controller and capture an image at a location of the remote controller based on a relative position relationship between a UAV vehicle and the remote controller.

19. A computer-readable storage medium storing a computer program and/or instruction, wherein when executed by a processor, the program and/or instruction implements the steps of the method according to any one of claims 1 to 14.

20. A computer program product comprising a computer program and/or instruction, wherein when executed by a processor, the program and/or instruction implements the steps of the method according to any one of claims 1 to 14.

21. A UAV vehicle comprising the computer device according to any one of claims 15 to 18, wherein the UAV vehicle is further configured to carry the UAV.
